Europäisches Patentamt

European Patent Office

Office européen des brevets

(19)

(11) **EP 1 721 759 A1**

(12) **DEMANDE DE BREVET EUROPEEN**

(43) Date de publication:
**15.11.2006 Bulletin 2006/46**

(51) Int Cl.:
***B60C 17/06*** *(2006.01)*

(21) Numéro de dépôt: **06113013.4**

(22) Date de dépôt: **24.04.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **03.05.2005 FR 0504481**

(71) Demandeurs:
• **Société de Technologie Michelin
63000 Clermont-Ferrand (FR)**

• **MICHELIN Recherche et Technique S.A.
1763 Granges-Paccot (CH)**

(72) Inventeur: **Lacour, Jean-Charles
63000, Clermont- Ferrand (FR)**

(74) Mandataire: **Dequire, Philippe Jean-Marie Denis
M.F.P. Michelin,
SGD/LG/PI-F35-Ladoux
63040 Clermont-Ferrand Cedex 09 (FR)**

(54) **Appui de soutien segmente**

(57)     Appui de soutien (1, 2) destiné à être monté sur une jante à l'intérieur d'un pneumatique comportant une base (100) sensiblement cylindrique destinée à s'adapter autour de la jante, un sommet (101) sensiblement cylindrique et un corps annulaire (102) reliant la base et le sommet. Ledit corps est constitué par une pluralité de cloisons (103) généralement radiales, réparties sur la circonférence dudit appui et par des jonctions (106) généralement radiales s'étendant circonférentiellement et reliées par leurs extrémités à deux cloisons adjacentes, caractérisé en ce que ces jonctions (106) sont interrompues par des saignées (104) axiales de très faible largeur s'étendant radialement sur la totalité de la jonction et débouchant axialement de part et d'autre de ladite jonction.

Fig. 1

## Description

La présente invention concerne les appuis de soutien pour pneumatiques de véhicules, destinés à être montés sur leurs jantes, à l'intérieur des pneumatiques pour supporter la charge en cas de défaillance du pneumatique ou de pression anormalement basse.

Elle concerne plus particulièrement les appuis de soutien dits « structurels », généralement réalisés à partir d'un matériau élastomère, comportant :

- une base sensiblement cylindrique destinée à s'adapter à la jante ;
- un sommet sensiblement cylindrique destiné à entrer en contact avec la partie intérieure du pneumatique située sous la bande de roulement, en cas de perte de pression, et laissant une garde par rapport à celle-ci à la pression nominale de fonctionnement du pneumatique ; et
- un corps annulaire reliant la base et le sommet, ledit corps étant constitué par une pluralité de cloisons généralement radiales, s'étendant axialement de part et d'autre d'un plan médian circonférentiel et réparties sur la circonférence dudit appuis. Ces cloisons peuvent être reliées deux à deux par des éléments de jonction s'étendant sensiblement circonférentiellement.

De nombreuses publications décrivent les profils et la disposition de ces cloisons et de ces éléments de jonction.

La publication US 4 248 286 dévoile un appui comportant des cloisons sensiblement axiales non reliées par des éléments de jonction circonférentiels.

Les publications EP 796 747, JP3082601 WO 00/76791 présentent des profils de cloisons reliées entre elles par des jonctions continues sensiblement circonférentielles. Ces éléments de jonction, peuvent être situés d'un même côté d'un plan médian, ou alternés de part et d'autre du plan médian ; de même, la géométrie des cloisons peut être adaptée dans leur partie centrale pour résister à un flambement sous un chargement radial du corps annulaire. Ces profils de corps annulaire ont l'avantage par rapport à la publication US 4 248 286 précédemment citée d'augmenter très significativement la rigidité structurelle du corps annulaire et par voie de conséquence de permettre d'alléger considérablement la masse de l'appui de soutien pour une charge identique et un matériau donné. Il est à noter que la diminution du poids des ensembles roulants non suspendus constitue un élément majeur de la performance des véhicules et qu'à ce titre, l'allègement de l'appui représente un enjeu de premier ordre.

En condition de roulage à plat, ou sous faible pression, les cloisons de l'appui vont subir un écrasement limité dans l'aire de contact entre le sol et le pneumatique sous l'effet de la partie du poids du véhicule appliquée sur cet ensemble roulant et des charges dynamiques que subit ce même ensemble roulant lors des changements de direction du véhicule. Il est à noter que la performance de roulage à plat du véhicule dépend en partie de la forme de cette aire de contact. Pour ce mode de fonctionnement on cherchera donc à éviter l'effondrement de l'appui sur lui-même, que provoquerait le flambement des cloisons sous l'effet d'une charge trop importante. Si tel était le cas, l'appui perdrait en grande partie ses fonctionnalités et surtout verrait sa performance en endurance décroître de manière spectaculaire en raison des échauffements que provoqueraient les flexions répétées des cloisons.

Toutefois, si les appuis de soutien sont conçus pour satisfaire entre autres les conditions de roulage à plat, celles ci demeurent fort heureusement exceptionnelles. Il est en effet souhaitable de faire en sorte que l'appui ne perturbe pas le fonctionnement du pneumatique en condition d'usage normal sous pression nominale. Ceci pourrait être le cas lorsque le véhicule affronte accidentellement un obstacle localisé, tel qu'un nid de poule ou un trottoir, à une vitesse excessive. En effet lorsque cet événement accidentel se produit, l'obstacle agit comme un coin et vient comprimer localement le pneumatique, lequel va se déformer. La course radiale de cette déformation, varie en fonction de la quantité globale d'énergie à absorber, laquelle dépend au premier ordre de la vitesse et de la masse du véhicule au moment du choc ainsi que de la forme de l'obstacle localisé.

Cette déformation comporte trois phases bien distinctes :

- une course purement pneumatique correspondant à la compression du pneumatique jusqu'à ce que la surface interne du pneumatique vienne en contact avec l'appui,
- une phase combinée au cours de laquelle, le pneumatique poursuivant sa course de mise en compression, les cloisons de l'appui situées au niveau de l'impact rentrent à leur tour en compression puis, lorsque le seuil de flambement des cloisons est atteint, s'effondrent sur elles-mêmes,
- enfm, une phase non pneumatique lorsque l'ensemble constitué par le pneumatique et l'appui est comprimé sur lui-même et forme un ensemble solide élastique jusqu'à constituer un ensemble incompressible. En dernier ressort l'absorption de cette énergie peut se traduire par une déformation permanente des éléments mécaniques eux-mêmes.

L'intégration d'un appui de soutien dans un pneumatique est donc susceptible de réduire sensiblement la course purement pneumatique en cas de choc, comparativement à la situation dans laquelle aucun appui de soutien ne serait introduit sur la jante. On observera que pendant la phase de compression des cloisons qui se produit au début de la phase combinée, la course de la déformation est faible et absorbe une grande quantité d'énergie ce qui est une cause d'inconfort pour le passager du véhicule et de sollicitation importante des organes mécaniques du véhicule.

On recherchera donc, lors de la conception des appuis, à améliorer ce niveau de performance.

Une première solution consiste à augmenter la garde de l'appui, ce qui revient à réduire la hauteur dudit appui. Néanmoins, ceci ne saurait se faire sans réduire également, et de manière importante, la performance en mode de roulage à plat, en raison de l'augmentation de la flexion des flancs du pneumatique dans cette configuration.

L'invention permet de réaliser des appuis de soutien de masse équivalente et ayant les mêmes performances en mode roulage à plat que les appuis structurels précédemment décrits, mais présentant la particularité de réduire de manière contrôlée, en cas de choc accidentel, de type choc trottoir ou choc nid de poule, le seuil de flambement des cloisons. Ce qui a pour effet de réduire de manière significative l'énergie transmise au châssis, en améliorant de ce fait le confort des passagers.

Selon une première forme de réalisation, l'invention propose un appui de soutien destiné à être monté sur une jante à l'intérieur d'un pneumatique équipant un véhicule, pour supporter la bande de roulement de ce pneumatique en cas de perte de pression de gonflage, comportant :

- une base sensiblement cylindrique destinée à s'adapter à la jante,
- un sommet sensiblement cylindrique destiné à entrer en contact avec la partie intérieure du pneumatique située sous la bande de roulement en cas de perte de pression et laissant une garde par rapport à celle-ci à la pression nominale de fonctionnement du pneumatique, et
- un corps annulaire reliant la base et le sommet, ledit corps étant constitué par une pluralité de cloisons, généralement radiales, réparties sur la circonférence dudit appui et s'étendant sensiblement axialement, et par des jonctions, généralement radiales, s'étendant sensiblement circonférentiellement et reliées par leurs extrémités à deux cloisons adjacentes,

caractérisé en ce que les jonctions sont interrompues par des saignées axiales de très faible largeur s'étendant radialement sur la totalité de ladite jonction et débouchant axialement de part et d'autre de la jonction, la portion d'appui comprise entre deux saignées constituant un segment et en ce que, chaque saignée étant défmie géométriquement par un profil transversal obtenu en coupant ladite saignée par un plan de coupe sensiblement transversal à la direction moyenne de la saignée, le profil transversal présente à son extrémité radiale des courbures (p) supérieures à un mm.

Il a été mis en évidence que la présence de cette saignée de faible largeur ne perturbe pratiquement pas le fonctionnement de l'appui en mode de roulage à plat, lequel se comporte sensiblement comme un appui standard similaire et dans lequel les jonctions demeurent continues. Mais qu'en revanche, les cloisons d'un appui conforme à l'invention "s'effacent" plus aisément sous l'action d'un choc ponctuel que les appuis traditionnels.

Le fait que les saignées présentent à leur ou leurs extrémités radiales un profil transversal avec une courbure supérieure à 1 mm permet d'obtenir un excellent comportement en fatigue de ces extrémités. En effet, on a constaté qu'avec des courbures inférieures, par exemple de l'ordre de 0,5 mm, des fissures peuvent progressivement apparaître lors de roulage à plat à ces extrémités radiales des saignées ou lors de chocs répétés sur des coins par exemple.

Il est avantageux que ces courbures soient comprises entre :

$$\frac{d}{2} \prec \rho \prec d$$

dans lequel d est la largeur transversale des saignées.

Afin de réduire encore le seuil de flambement des cloisons il est possible, dans une deuxième forme de réalisation de prolonger radialement la saignée sur tout ou partie du sommet.

Le mode de fonctionnement d'un appui de soutien conforme à l'invention ainsi que les différents modes de réalisation conformes à l'invention sont décrits ci-après en référence aux schémas et dessins dans lesquels :

- la figure 1 représente une vue perspective schématique simplifiée d'un appui de soutien conforme à l'invention,
- la figure 2 représente une vue de face d'une portion d'appui tel que représenté sur la figure 1,
- la figure 3 représente une vue en coupe selon une ligne FF' de la portion d'appui telle que représentée sur la figure 2,
- la figure 4 représente une vue en perspective de la portion d'appui représentée sur les figures 2 et 3,
- la figure 5 représente une vue schématique partielle d'un appui en mode de fonctionnement à pression réduite,
- la figure 6 représente une vue schématique partielle d'un appui en cas de choc,
- la figure 7 représente un diagramme comparant les efforts enregistrés au centre roue, en fonction de la déformation par un obstacle isolé, d'un ensemble roulant constitué d'un pneumatique monté sur une jante et comportant un appui de soutien et gonflé à sa pression nominale,
- la figure 8 représente une vue perspective schématique simplifiée d'un appui de soutien conforme à l'invention selon un deuxième mode de réalisation,

- la figure 9 représente une vue de face d'une portion d'appui tel que représenté sur la figure 8,
- la figure 10 représente une vue en coupe selon une ligne GG' de la portion d'appui telle que représentée sur la figure 9,
- la figure 11 représente une vue perspective de la portion d'appui représentée sur les figures 9 et 10,
- la figure 12 représente une vue schématique partielle d'un appui conforme à l'invention selon un deuxième mode de réalisation en mode de fonctionnement à pression réduite,
- la figure 13 représente une vue schématique partielle d'un appui conforme à l'invention selon un deuxième mode de réalisation en cas de choc, et
- la figure 14 présente un coupe transversale de l'extrémité radiale d'une saignée.

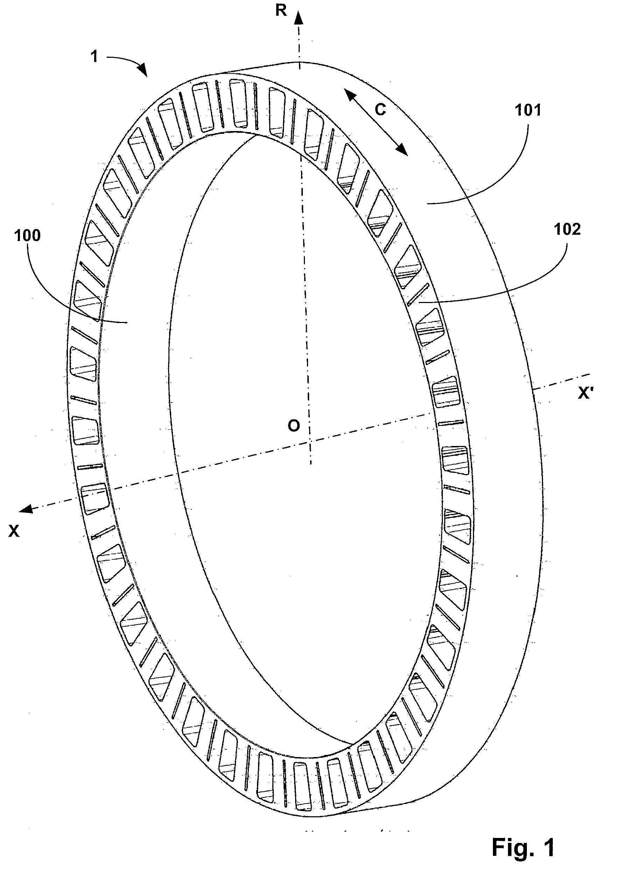

Dans ce qui suit, on désignera par les mêmes références les éléments identiques des appuis représentés sur les figures 1 à 13.

L'appui 1 tel que représenté sur la vue schématique de la figure 1 comprend une base 100 sensiblement cylindrique et destinée à s'adapter à une jante (non représentée), un sommet 101, destiné à entrer en contact avec la partie intérieure du pneumatique située sous la bande de roulement en cas de perte de pression, et un corps 102 reliant la base au sommet.

La direction axiale XX' est une direction sensiblement parallèle aux génératrices des cylindres formés par la base ou le sommet. La direction radiale R est une direction perpendiculaire à la direction axiale, et la direction circonférentielle C est perpendiculaire aux deux directions précédentes et tangente aux cylindres formés par la base ou le sommet.

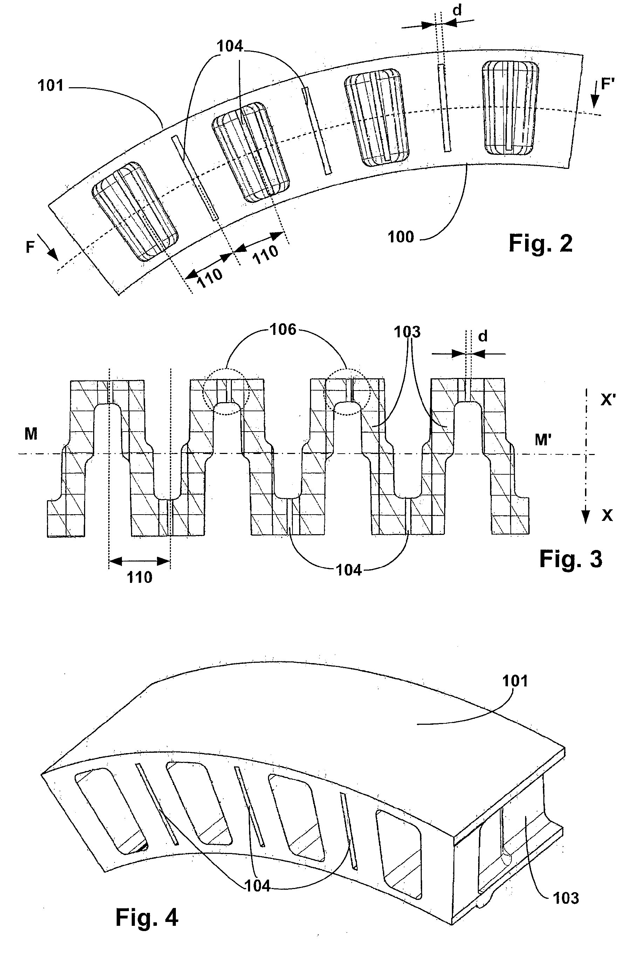

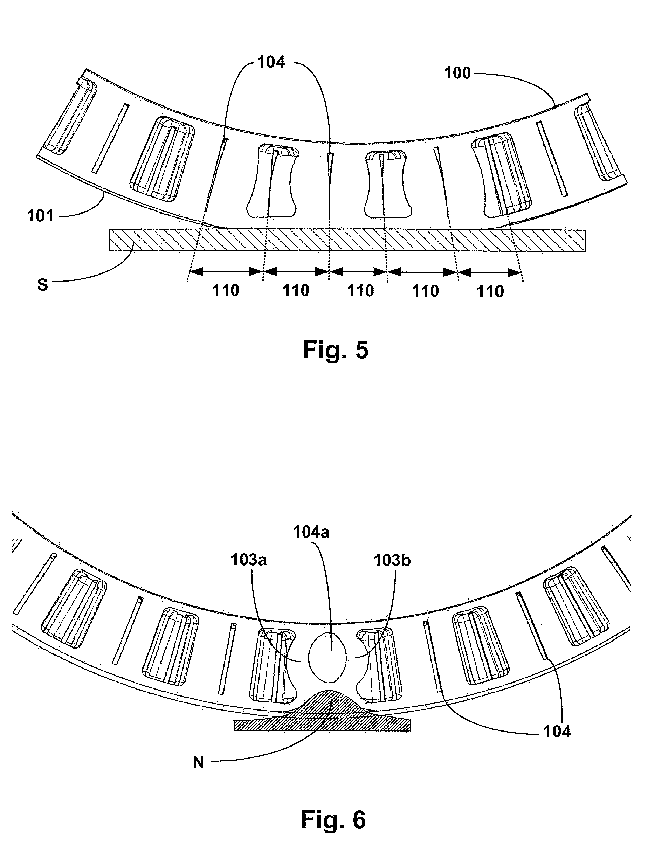

Le corps de l'appui annulaire 102 est composé de cloisons 103 telles que représentées sur les figures 2 et 3. Ces cloisons 103, généralement radiales, s'étendent axialement de part et d'autre d'un plan médian perpendiculaire à l'axe XX', passant sensiblement par l'équateur des cylindres formés par la base 100 ou le sommet 101, et dont la trace sur la coupe de la figure 3 est représentée par la ligne MM'. Les cloisons sont réparties sur la circonférence dudit appui 1. Des jonctions 106, généralement radiales, s'étendant sensiblement circonférentiellement, relient par leurs extrémités deux cloisons adjacentes.

Ces jonctions 106 sont interrompues par des saignées axiales 104, s'étendant radialement sur la totalité de la jonction et débouchant axialement de part et d'autre de ladite jonction. La portion d'appui comprise entre deux saignées constitue un segment 110.

La figure 5 représente schématiquement le mode de fonctionnement, au niveau de l'aire de contact, de l'appui 1 à pression réduite voire nulle et portant sa charge nominale. Les forces de compression radiales génèrent une composante circonférentielle au niveau des segments 110 en contact avec la portion de pneumatique en contact avec le sol S. Ces forces sont liées à la déradialisation du sommet 101 de l'appui sous l'effet de sa mise à plat lors du passage dans l'aire de contact.

Sous l'action de ces forces circonférentielles, les segments 110 sont mis en compression et s'arc-boutent les uns contre les autres au niveau des saignées 104. Ce qui permet, en s'aidant des forces de frottement entre les lèvres des saignées 104 d'éviter tout déplacement circonférentiel ou axial des jonctions 106, ayant pour effet néfaste de provoquer la déradialisation des cloisons 103 et de précipiter le flambage de ces dernières.

Ainsi, le corps annulaire 102 se comporte sensiblement comme si aucune saignée 104 n'avait été pratiquée dans les jonctions 106, et bénéficie de ce fait des avantages structurels liés à cette configuration géométrique.

Pour obtenir cette propriété il est nécessaire d'ajuster la distance dans le sens circonférentiel entre deux saignées 104 de manière à ce qu'il y ait toujours au moins trois segments 110 complets en contact avec la partie intérieure du pneumatique située sous la bande de roulement et en contact avec le sol S.

De plus, la largeur d dans la direction circonférentielle entre les deux lèvres d'une même saignée 104 doit être choisie judicieusement. On recherchera néanmoins une valeur aussi faible que possible afin de bénéficier pleinement de l'effet d'arc-boutement lié à la mise en compression des segments. Expérimentalement on observe que cette distance d ne doit pas excéder 3 mm et préférentiellement on choisira une valeur de la distance d comprise entre 1 et 3 mm, de l'ordre de 2 mm.

L'effet recherché par l'invention se manifeste en revanche, lorsque le pneumatique entre en contact avec le bord N d'un nid de poule ou d'un trottoir et lors de la phase de compression combinée comme cela est représenté sur la figure 6. Dans ces circonstances, l'effort va se localiser sur une génératrice du cylindre formé par le sommet de l'appui et va s'appliquer au niveau d'un seul segment voire entre deux segments consécutifs. Par ailleurs, en l'absence de mise à plat, les forces de compression circonférentielle liées à la déradialisation du sommet de l'appui ne s'exercent plus, ne permettant plus la coopération entre deux segments consécutifs, ce qui provoque le flambement des deux cloisons 103a et 103b situées de part et d'autre de la saignée 104a circonférentiellement la plus proche du point d'impact, laquelle va avoir tendance à s'ouvrir, tel que l'illustre la figure 6. En effet, en raison de la saignée pratiquée sur la jonction 106, la résistance au flambement des cloisons de ces segments est moindre que dans le cas où aucune saignée ne serait pratiquée. En conséquence, et sous l'effet d'un effort localisé, il est possible pendant la course combinée de l'appui et du pneumatique, de réduire la phase de mise en compression de l'appui et de prolonger l'effet de la course pneumatique afin de réduire les efforts mécaniques transmis au centre roue.

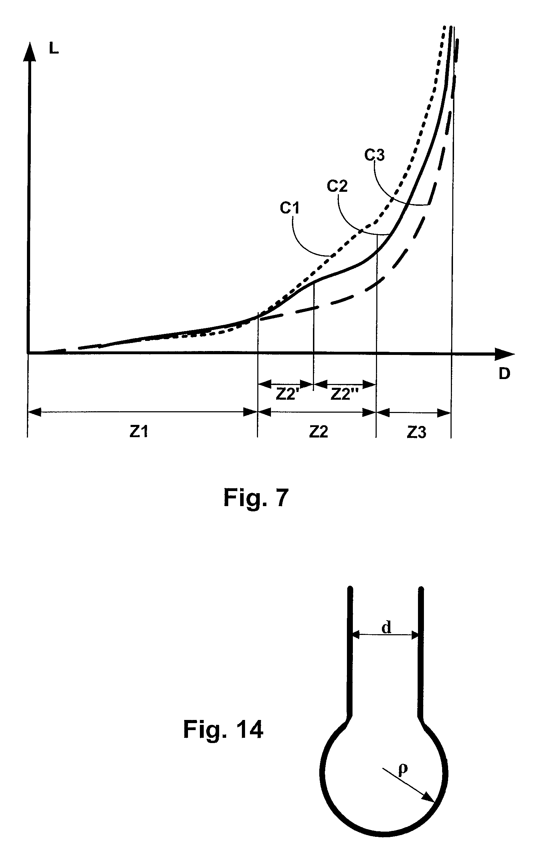

Ce phénomène est illustré sur le diagramme représenté sur la figure 7 qui représente en ordonnée la force L exercée au centre roue par l'action d'un obstacle ponctuel dont la distance de pénétration D est consignée en abscisse.

Sur ce schéma, obtenu pour une roue de dimension 235x500 A, un pneumatique de dimension 245x690xR500 et un appui de dimension 90-500(35), sont représentées trois configurations :

- C1 représente le cas d'un ensemble roue/pneumatique avec un appui ne comprenant pas de saignées,
- C2 représente le cas d'un ensemble roue/pneumatique avec des appuis comportant des saignées conformes à l'invention ; le profil circonférentiel des cloisons et des jonctions étant identique à celui de l'appui représenté en C1,
- C3 représente le cas d'un ensemble roue/pneumatique ne comportant pas d'appui.

Fort logiquement, l'enfoncement de l'obstacle se traduit par une augmentation de la force enregistrée, ce qui permet de distinguer les trois zones de fonctionnement décrites précédemment :

- Z1 correspond à la course pneumatique de l'enfoncement ;
- Z2 correspond à la phase combinée au cours de laquelle l'appui rentre en contact avec le pneumatique,
- Z3 correspond à la compression non pneumatique et se termine par une phase de transmission purement mécanique.

Ce schéma met clairement en évidence le mode de fonctionnement d'un système équipé d'un appui selon l'invention, pour lequel on observe une zone de fonctionnement Z1 similaire aux deux autres, une zone Z2 que l'on peut décomposer en deux zones bien distinctes où Z2' correspond à la mise en compression des cloisons et où Z2" correspond à l'apparition du phénomène de flambement des cloisons 103a et 103b et à l'ouverture de la saignée 104a, et tels qu'illustrés sur la figure 6.

On constate que l'appui conforme à l'invention permet de réduire sensiblement la phase de mise en compression de l'appui dans la zone Z2, se rapprochant de celui d'un système ne comportant pas d'appui tel que décrit par la courbe C3, et se décale de la configuration d'un appui sur lequel aucune saignée n'aurait été pratiquée, décrit par la courbe C1, et dont le profil présente dans la zone Z2 un gradient d'augmentation de l'effort plus important pour un même déplacement.

Il est possible également, en référence à la configuration qui vient d'être exposée et sans se départir de l'esprit de l'invention, de réduire encore plus l'énergie nécessaire pour provoquer le flambement des cloisons soumises à un choc ponctuel.

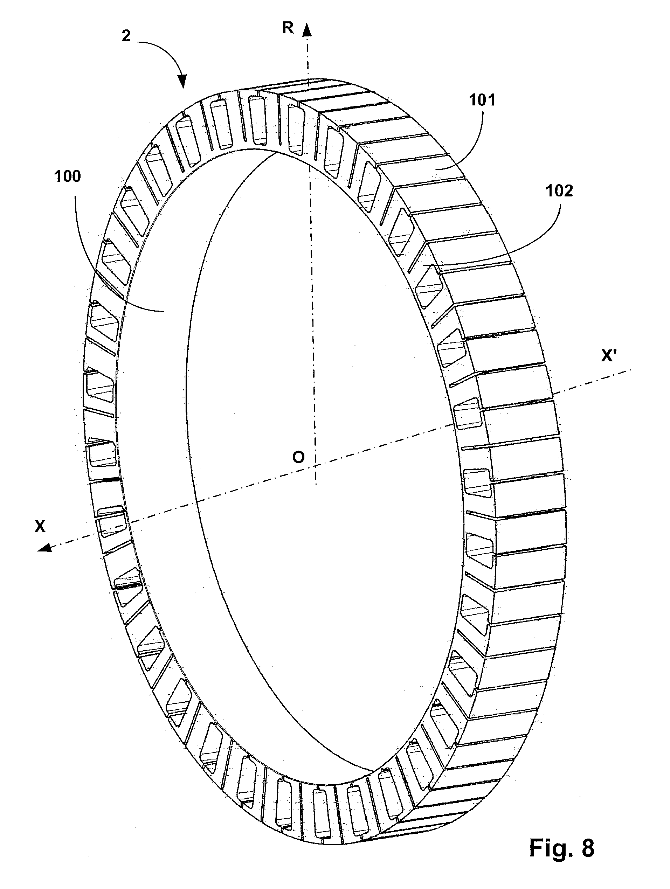

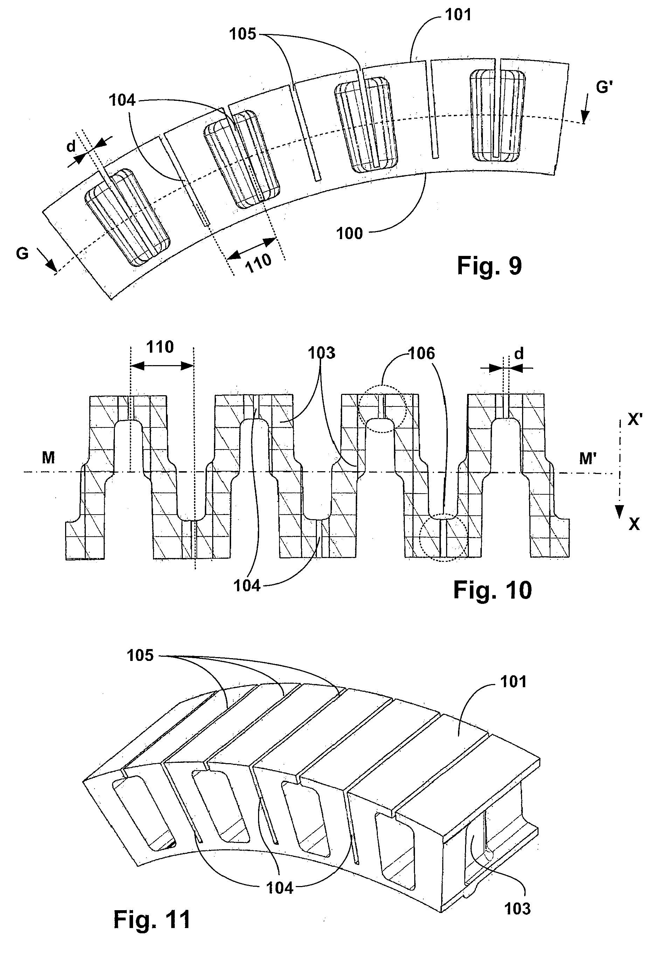

A cet effet, une autre forme de mise en oeuvre de l'invention consiste à prolonger la saignée 104 pratiquée dans la jonction 106 par une saignée 105 pratiquée radialement dans toute l'épaisseur du sommet de l'appui 2 et s'étendant axialement sur toute la largeur de ce dernier, de part et d'autre du plan médian passant sensiblement par l'équateur des cylindres formés par la base 100 ou le sommet 101, dont la trace sur la coupe de la figure 10 est représentée par la ligne MM', et tel qu'illustré sur les figures 8, 9, 10 et 11.

Cette configuration permet de réduire encore la résistance structurelle au flambement des cloisons 103, celles ci n'étant plus reliées entre elles par leurs sommets.

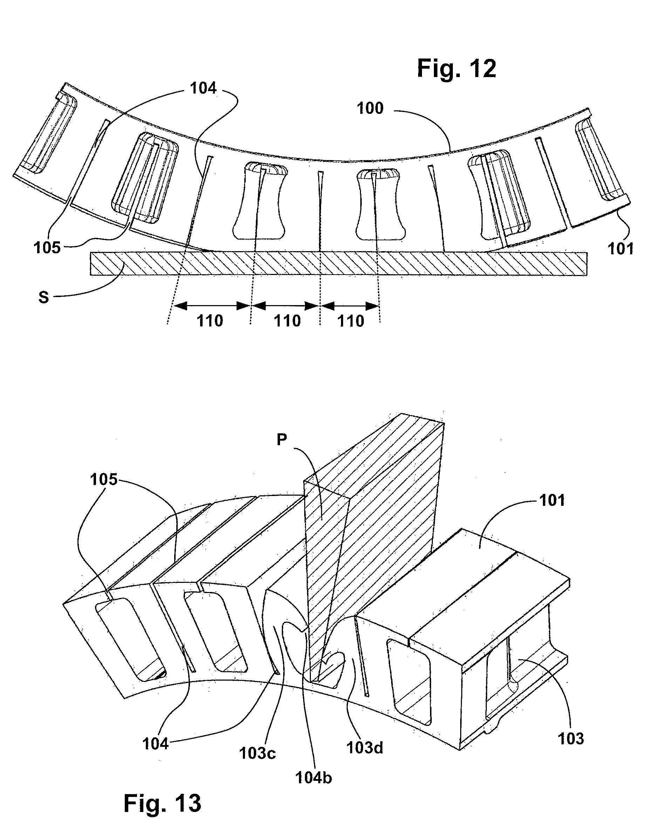

Dans ces conditions, le mode de fonctionnement en condition de roulage à plat est sensiblement équivalent à celui décrit précédemment et dans lequel les cloisons s'appuient les unes contre les autres sous l'effet des forces circonférentielles induites par la déradialisation au moment de la mise à plat, et sous réserve, comme dans la situation déjà décrite précédemment, que trois segments au moins soient présents simultanément dans l'aire de contact, comme le montre la figure 12.

En revanche, lors du passage dans un nid de poule ou sur le bord d'un trottoir, comme cela est illustré sur la figure 13, les cloisons 103c et 103d des segments situés circonférentiellement de part et d'autre de la saignée 104b la plus proche du point de contact avec l'obstacle ponctuel P, vont avoir tendance à flamber pour un plus faible niveau d'énergie, et la saignée 104b à s'ouvrir largement pour laisser pénétrer l'obstacle P.

Une troisième configuration, intermédiaire entre les deux précédemment décrites, consiste à ne faire déboucher les saignées 105 que dans la partie médiane ou centrale du sommet de l'appui.

La figure 14 présente une coupe transversale d'une extrémité radiale de l'une quelconque des saignées 104 ou 105 présentées dans les figures précédentes. Ce profil transversal est obtenu en coupant la saignée par un plan de coupe sensiblement transversal à la direction moyenne de la saignée.

Sur la figure 14 comme sur les figures précédentes, on voit que la largeur transversale d de la saignée est sensiblement constante sur l'ensemble de la hauteur radiale de la saignée. Cette largeur transversale d est ici de l'ordre de 2 à 2,5 mm. Ce profil présente à son extrémité radiale un renflement de largeur supérieure à d. A cette extrémité, le profil transversal présente des courbures p supérieures à un millimètre. Sur l'exemple de la figure 14, le renflement est de forme torique avec un rayon de l'ordre de deux mm.

Bien entendu, dans le cas des saignées 104 qui s'étendent sur toute la hauteur radiale du corps annulaire 102, ce renflement est situé aux deux extrémités radiales intérieure et extérieure de la saignée. En revanche, dans le cas des saignées 105, qui se prolongent dans le sommet 101, il n'y a qu'un renflement situé à l'extrémité radiale intérieure.

Lorsque les saignées 105 ne débouchent que dans la partie médiane ou centrale du sommet de l'appui, sur les parties latérales de l'appui, les saignées présentent deux renflements aux deux extrémités intérieure et extérieure.

La présence de ces renflements permet d'améliorer sensiblement la résistance en roulage à plat de l'appui tout en conservant un excellent comportement lors d'un choc sur un coin par exemple.

Les matériaux susceptibles de convenir pour réaliser des appuis conformes à l'invention sont ceux qui sont classiquement utilisés pour la réalisation des appuis de soutien tels que, à titre d'exemple et de manière non limitative, les mélanges caoutchoutiques dont le module d'élasticité peut varier de 10 à 40 MPa, les élastomères de polyuréthanne ayant des modules d'élasticité compris entre 20 et 150 MPa ou encore, les élastomères thermoplastiques dont le module d'élasticité est compris entre 20 et 150 MPa.

Le module des matériaux élastomères exprimé en MPa correspond à la mesure en traction et à un allongement de 10% d'une éprouvette, selon la norme ISO 6892 de 1984 et à la norme ASTM D 412 de 1998 en ce qui concerne les compositions de caoutchouc.

Enfin, on prendra soin de définir les saignées pratiquées dans les cloisons 103 ou dans le sommet 105 de telle manière qu'elles présentent le moins de contre dépouille possible s'opposant à un démoulage dans la direction axiale de l'appui de soutien et susceptibles de compliquer le processus de fabrication.

Ainsi la mise en oeuvre de l'invention s'avère particulièrement intéressante dans la configuration où il est impératif de réduire la masse totale de l'appui, ce qui s'obtient en utilisant des matériaux de module d'élasticité élevé. La contrepartie de ce choix technique se traduit généralement par une augmentation de la rigidité radiale de l'appui et une baisse de la performance en cas de choc avec un obstacle localisé comparé à la situation d'un appui réalisé avec un matériau de plus faible module ou encore à une situation dans laquelle aucun appui ne serait monté. L'invention permet d'améliorer le niveau de la performance en cas de choc ponctuel accidentel, tout en bénéficiant des avantages liés à la configuration structurelle des appuis traditionnels.

**Revendications**

1. Appui de soutien (1, 2) destiné à être monté sur une jante à l'intérieur d'un pneumatique équipant un véhicule, pour supporter la bande de roulement de ce pneumatique en cas de perte de pression de gonflage, comportant :

   - une base (100) sensiblement cylindrique destinée à s'adapter autour de la jante,
   - un sommet (101) sensiblement cylindrique destiné à entrer en contact avec la partie intérieure du pneumatique située sous la bande de roulement en cas de perte de pression et laissant une garde par rapport à celle-ci à la pression nominale de fonctionnement du pneumatique, et
   - un corps annulaire (102) reliant la base et le sommet, ledit corps étant constitué par une pluralité de cloisons (103) généralement radiales, réparties sur la circonférence dudit appui et s'étendant sensiblement axialement et par des jonctions (106), généralement radiales, s'étendant sensiblement circonférentiellement et reliées par leurs extrémités à deux cloisons adjacentes,

   **caractérisé en ce que** les jonctions (106) sont interrompues par des saignées (104) axiales de très faible largeur s'étendant radialement sur la totalité de la jonction (106) et débouchant axialement de part et d'autre desdites jonctions (106), la portion d'appui comprise entre deux saignées constituant un segment (110) et **en ce que**, chaque saignée étant définie géométriquement par un profil transversal obtenu en coupant ladite saignée par un plan de coupe sensiblement transversal à la direction moyenne de la saignée, le profil transversal présente à son extrémité radiale des courbures (p) supérieures à un mm.

2. Appui de soutien selon la revendication 1, tel que les courbures (p) sont comprises entre :

$$\frac{d}{2} \prec \rho \prec d$$

   dans lequel d est la largeur transversale de ladite saignée.

3. Appui de soutien selon l'une des revendications 1 et 2, tel que la largeur (d) dans le sens circonférentiel des saignées (104) est inférieure à 3 mm.

4. Appui de soutien selon la revendication 3, tel que la largeur (d) dans le sens circonférentiel des saignées (104) est supérieure à 1 mm.

5. Appui de soutien selon l'une des revendications 1 à 4, tel que la distance dans le sens circonférentiel entre deux saignées (104) est ajustée de manière à ce que, lorsque l'appui est en mode de roulage à pression réduite ou nulle et supporte sa charge nominale, il y ait toujours au moins trois segments (110) complets en contact avec la partie intérieure du pneumatique située sous la bande de roulement et en contact avec le sol (S).

6. Appui de soutien selon une des revendications 1 à 5, tel que la saignée radiale (104) pratiquée dans la jonction (106) est prolongée par une saignée (105) pratiquée radialement dans toute l'épaisseur du sommet (101) de l'appui et s'étendant axialement dans la partie centrale dudit sommet.

**7.** Appui de soutien selon une des revendications 1 à 5, tel que la saignée radiale (104) pratiquée dans la jonction (106) est prolongée par une saignée (105) pratiquée radialement dans toute l'épaisseur du sommet (101) de l'appui et s'étendant axialement sur toute la largeur dudit sommet.

**8.** Appui de soutien selon l'une quelconque des revendications 1 à 6, tel que la forme des cloisons (103), des jonctions (106) et des saignées (104, 105) est adaptée de manière à ne comprendre aucune partie en contre dépouille s'opposant à un démoulage axial de l'appui de soutien (1, 2).

**9.** Appui selon l'une des revendications 1 à 8, tel que le matériau constitutif dudit appui de soutien (1, 2) est un mélange caoutchouteux de module d'élasticité compris entre 10 et 40 MPa.

**10.** Appui selon l'une des revendications 1 à 8, tel que le matériau constitutif dudit appui de soutien (1, 2) est un élastomère de polyuréthane de module d'élasticité compris entre 20 et 150 MPa.

**11.** Appui selon l'une des revendications 1 à 8, tel que le matériau constitutif dudit appui de soutien (1, 2) est un élastomère thermoplastique de module d'élasticité compris entre 20 et 150 MPa.

**Fig. 1**

**Fig. 2**

**Fig. 3**

**Fig. 4**

**Fig. 5**

**Fig. 6**

**Fig. 7**

**Fig. 14**

**Fig. 8**

**Fig. 9**

**Fig. 10**

**Fig. 11**

**Fig. 12**

104   100

105

101

S

110   110   110

**Fig. 13**

P

105

101

104

103c   103d   103

104b

14

**EP 1 721 759 A1**

**Office européen
des brevets**

# RAPPORT DE RECHERCHE EUROPEENNE

Numéro de la demande

EP 06 11 3013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| D,A | WO 00/76791 A (SOCIETE DE TECHNOLOGIE MICHELIN; MICHELIN RECHERCHE ET TECHNIQUE S.A;) 21 décembre 2000 (2000-12-21) * page 7, ligne 4 - page 8, ligne 7; figures 1-3 * ----- | 1 | INV. B60C17/06 |
| A | EP 0 359 388 A (SUMITOMO RUBBER INDUSTRIES LIMITED) 21 mars 1990 (1990-03-21) * le document en entier * ----- | 1 | |

| DOMAINES TECHNIQUES RECHERCHES (IPC) |
|---|
| B60C |

Le présent rapport a été établi pour toutes les revendications

| Lieu de la recherche | Date d'achèvement de la recherche | Examinateur |
|---|---|---|
| Munich | 7 août 2006 | Buergo, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

15

**ANNEXE AU RAPPORT DE RECHERCHE EUROPEENNE
RELATIF A LA DEMANDE DE BREVET EUROPEEN NO.**

EP 06 11 3013

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-08-2006

| Document brevet cité au rapport de recherche | | Date de publication | Membre(s) de la famille de brevet(s) | | Date de publication |
|---|---|---|---|---|---|
| WO 0076791 | A | 21-12-2000 | AT | 258500 T | 15-02-2004 |
| | | | DE | 60007989 D1 | 04-03-2004 |
| | | | DE | 60007989 T2 | 28-10-2004 |
| | | | EP | 1192054 A1 | 03-04-2002 |
| | | | ES | 2214280 T3 | 16-09-2004 |
| | | | FR | 2794686 A1 | 15-12-2000 |
| | | | JP | 2003502200 T | 21-01-2003 |
| | | | US | 2002124924 A1 | 12-09-2002 |
| EP 0359388 | A | 21-03-1990 | JP | 2141311 A | 30-05-1990 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4248286 A
- EP 796747 A
- JP 3082601 B
- WO 0076791 A